(19) Europäisches Patentamt / European Patent Office / Office européen des brevets

(11) **EP 4 195 469 A1**

(12) **DEMANDE DE BREVET EUROPEEN**

(43) Date de publication:
**14.06.2023   Bulletin 2023/24**

(51) Classification Internationale des Brevets (IPC):
*H02K 11/02* (2016.01)    *E06B 9/72* (2006.01)
*H02K 11/35* (2016.01)    *E06B 9/40* (2006.01)
*E06B 9/68* (2006.01)

(21) Numéro de dépôt: **22212732.6**

(22) Date de dépôt: **12.12.2022**

(52) Classification Coopérative des Brevets (CPC):
**H02K 11/02; E06B 9/72; H02K 11/35;** E06B 9/40;
E06B 2009/6809; H02K 2207/03; H02K 2211/03

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité:   **13.12.2021   FR 2113387**

(71) Demandeur: **SOMFY ACTIVITES SA**
**74300 Cluses (FR)**

(72) Inventeurs:
• **TINE, Damien**
**74300 CLUSES (FR)**
• **FAUVEAU, Christophe**
**74300 CLUSES (FR)**

(74) Mandataire: **Lavoix**
**62, rue de Bonnel**
**69448 Lyon Cedex 03 (FR)**

(54) **DISPOSITIF D'ENTRAÎNEMENT MOTORISÉ D'UN DISPOSITIF D'OCCULTATION ET DISPOSITIF D'OCCULTATION ASSOCIÉ**

(57)   Un dispositif d'entraînement motorisé comprend un actionneur électromécanique (11), un dispositif d'alimentation en énergie électrique, un câble d'alimentation électrique (18) et une antenne radiofréquence filaire (58) non-blindée. L'unité électronique de contrôle (15) comprend une plaque de circuit imprimé (46), un module de communication (27), un module de filtrage électromagnétique et un module de désaccouplement électromagnétique. L'antenne (58) s'étend au travers d'un support de couple (21) de l'actionneur (11) et est reliée électriquement à une première piste électrique de la plaque de circuit imprimé (46). Chacun des fils d'alimentation électrique (Bat+, Bat-, SP1, SP2) du câble (18) s'étend au travers du support de couple (21) et est relié électriquement à une deuxième piste électrique d'alimentation de la plaque de circuit imprimé (46). Le module de filtrage comprend des inductances de mode commun, couplées entre elles, chacune reliée électriquement à l'une des deuxièmes pistes électriques. En outre, le module de désaccouplement comprend des inductances de mode différentiel, chacune reliée électriquement à l'une des deuxièmes pistes électriques.

Fig.5

**Description**

La présente invention concerne un dispositif d'entraînement motorisé d'un dispositif d'occultation, autrement dit un dispositif d'entraînement motorisé pour un dispositif d'occultation, ainsi qu'un dispositif d'occultation comprenant un tel dispositif d'entraînement motorisé.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà des dispositifs d'entraînement motorisés d'un dispositif d'occultation. Ces dispositifs d'entraînement motorisés comprennent un actionneur électromécanique, un dispositif d'alimentation en énergie électrique, un câble d'alimentation électrique et une antenne radiofréquence filaire. Le câble d'alimentation électrique comprend des fils d'alimentation électrique. L'actionneur électromécanique comprend un moteur électrique, une unité électronique de contrôle, un carter et un support de couple. Le moteur électrique et l'unité électronique de contrôle sont montés à l'intérieur du carter. Le support de couple est monté en partie à l'intérieur du carter. L'unité électronique de contrôle comprend une plaque de circuit imprimé et un module de communication. L'antenne radiofréquence filaire est reliée électriquement au module de communication de l'unité électronique de contrôle. L'unité électronique de contrôle et le moteur électrique sont alimentés en énergie électrique à partir du dispositif d'alimentation en énergie électrique, au moyen du câble d'alimentation électrique. L'antenne radiofréquence filaire s'étend au travers du support de couple et est reliée électriquement à une première piste électrique de la plaque de circuit imprimé. Chacun des fils d'alimentation électrique du câble d'alimentation électrique s'étend au travers du support de couple et est relié électriquement à une deuxième piste électrique d'alimentation de la plaque de circuit imprimé.

Cependant, ces dispositifs d'entraînement motorisés présentent l'inconvénient que, lorsque les fils d'alimentation électrique du câble d'alimentation électrique sont proches de l'antenne radiofréquence filaire, dans le cas où celle-ci est non-blindée, l'intensité des courants électriques de transmission d'un signal radiofréquence circulant par l'antenne radiofréquence filaire diminue.

Par conséquent, cette diminution de l'intensité des courants électriques transmettant un signal radiofréquence par l'antenne radiofréquence filaire provoque une diminution d'une performance radiofréquence du module de communication de l'unité électronique de contrôle.

Ce phénomène est amplifié lorsque des inductances de mode commun, couplées entre elles, sont ajoutées au niveau de l'unité électronique de contrôle. L'ajout de ces inductances de mode commun est généralement dû à un défaut de compatibilité électromagnétique de l'actionneur électromécanique, pouvant provenir d'un module d'alimentation électrique du moteur électrique et/ou d'un microcontrôleur de l'unité électronique de contrôle.

Le défaut de compatibilité électromagnétique est provoqué par une perturbation électromagnétique qui est générée par un élément perturbateur. En général, l'élément perturbateur est un composant électronique ou un groupe de composants électroniques réalisant des commutations électriques. Ces commutations électriques génèrèrent des pics de courant ou de tension et engendrent un rayonnement électromagnétique autour du ou des composants électroniques. Ce rayonnement électromagnétique est capté puis guidé par des conducteurs électriques.

Dans le cas d'un dispositif d'entraînement motorisé d'un dispositif d'occultation, le principal élément perturbateur est le module d'alimentation électrique du moteur électrique, pouvant également être appelé onduleur. La perturbation électromagnétique est captée par les pistes électriques de la plaque de circuit imprimé de l'unité électronique de contrôle, puis se transmet au travers des fils d'alimentation électrique du câble d'alimentation électrique. Les fils d'alimentation électrique du câble d'alimentation électrique étant en dehors du carter de l'actionneur électromécanique, ceux-ci engendrent un rayonnement électromagnétique dans l'air et celui-ci pollue l'environnement du dispositif d'entraînement motorisé. Dans ce cas, la perturbation électromagnétique est dite « rayonnée ».

L'amplification du phénomène de diminution de l'intensité des courants électriques transmettant un signal radiofréquence par l'antenne radiofréquence filaire est générée par un courant à la fréquence de communication du module de communication créé par un couplage électromagnétique entre, d'une part, les fils d'alimentation électrique du câble d'alimentation électrique et, d'autre part, les deuxièmes pistes électriques d'alimentation de la plaque de circuit imprimé de l'unité électronique de contrôle, par l'intermédiaire des inductances de mode commun.

Par conséquent, une partie des courants électriques de transmission d'un signal radiofréquence circulant par l'antenne radiofréquence filaire n'aboutissent pas au module de communication mais sont évacués par l'intermédiaire des deuxièmes pistes électriques d'alimentation de la plaque de circuit imprimé de l'unité électronique de contrôle et des fils d'alimentation électrique du câble d'alimentation électrique.

Pour s'affranchir de ce phénomène, une première solution est d'éloigner l'antenne radiofréquence filaire par rapport aux fils d'alimentation électrique du câble d'alimentation électrique. En outre, une deuxième solution est de remplacer l'antenne radiofréquence filaire non-blindée par une antenne radiofréquence filaire blindée, appelée généralement « antenne radiofréquence coaxiale ».

Cependant, ces première et deuxièmes solutions présentent l'inconvénient d'induire un encombrement important au niveau du support de couple de l'actionneur électromécanique pour la liaison électrique, d'une part, de l'antenne radiofréquence filaire à l'unité électronique de contrôle et, d'autre part, du câble d'alimentation électrique à l'unité électronique de contrôle.

On connaît également le document WO 2020/064882 A1 qui décrit un dispositif d'entraînement motorisé d'un dispositif d'occultation. Le dispositif d'entraînement motorisé comprend un actionneur électromécanique, un dispositif d'alimentation en énergie électrique, un câble d'alimentation électrique et une antenne radiofréquence filaire. L'actionneur électromécanique comprend un moteur électrique, une unité électronique de contrôle, un carter et un support de couple. Le moteur électrique est monté à l'intérieur du carter. Le support de couple et l'unité électronique de contrôle sont montés au moins en partie à l'intérieur du carter. L'unité électronique de contrôle comprend deux plaques de circuit imprimé et un module de communication. L'antenne radiofréquence filaire est reliée électriquement au module de communication de l'unité électronique de contrôle. L'unité électronique de contrôle et le moteur électrique sont alimentés en énergie électrique à partir du dispositif d'alimentation en énergie électrique, au moyen du câble d'alimentation électrique. L'antenne radiofréquence filaire s'étend au travers du support de couple. En outre, le câble d'alimentation électrique s'étend au travers du support de couple.

On connaît également le document CN 210 428 126 U qui décrit un module de contrôle de la compatibilité électromagnétique pour une technologie de communication filaire basée sur une transmission par un câble multibrins. Le câble multibrins est blindé, comprend une structure non-blindée et sert d'antenne de réception. Le module de contrôle de la compatibilité électromagnétique comprend une plaque de circuit imprimé et un filtre. Le filtre comprend un circuit de filtrage de mode commun et un circuit de filtrage de mode différentiel reliés l'un à l'autre.

La présente invention a pour but de résoudre les inconvénients précités et de proposer un dispositif d'entraînement motorisé d'un dispositif d'occultation, ainsi qu'un dispositif d'occultation comprenant un tel dispositif d'entraînement motorisé, permettant de garantir une performance radiofréquence d'un module de communication d'une unité électronique de contrôle et de limiter une perturbation électromagnétique, tout en minimisant un encombrement nécessaire au passage d'une antenne radiofréquence filaire et de fils d'alimentation électrique d'un câble d'alimentation électrique au travers d'un support de couple d'un actionneur électromécanique.

A cet égard, la présente invention vise, selon un premier aspect, un dispositif d'entraînement motorisé d'un dispositif d'occultation,

le dispositif d'entraînement motorisé comprenant au moins :

- un actionneur électromécanique,
- un dispositif d'alimentation en énergie électrique,
- un câble d'alimentation électrique, le câble d'alimentation électrique comprenant des fils d'alimentation électrique, et
- une antenne radiofréquence filaire,

l'actionneur électromécanique comprenant au moins :

- un moteur électrique,
- une unité électronique de contrôle,
- un carter, le moteur électrique étant monté à l'intérieur du carter, et
- un support de couple, le support de couple et l'unité électronique de contrôle étant montés au moins en partie à l'intérieur du carter,

l'unité électronique de contrôle comprenant au moins :

- une plaque de circuit imprimé, et
- un module de communication, l'antenne radiofréquence filaire étant reliée électriquement au module de communication de l'unité électronique de contrôle,

l'unité électronique de contrôle et le moteur électrique étant alimentés en énergie électrique à partir du dispositif d'alimentation en énergie électrique, au moyen du câble d'alimentation électrique, l'antenne radiofréquence filaire s'étendant au travers du support de couple et étant reliée électriquement à une première piste électrique de la plaque de circuit imprimé, chacun des fils d'alimentation électrique du câble d'alimentation électrique s'étendant au travers du support de couple et étant relié électriquement à une deuxième piste électrique d'alimentation de la plaque de circuit imprimé.

Selon l'invention, l'antenne radiofréquence filaire est non-blindée.

L'unité électronique de contrôle comprend, en outre :

- un module de filtrage électromagnétique, et
- un module de désaccouplement électromagnétique.

Le module de filtrage électromagnétique comprend des inductances de mode commun, couplées entre elles. Chacune des inductances de mode de commun est reliée électriquement à l'une des deuxièmes pistes électriques d'alimentation de la plaque de circuit imprimé. En outre, le module de désaccouplement électromagnétique comprend des inductances de mode différentiel. Chacune des inductances de mode différentiel est reliée électriquement à l'une des deuxièmes pistes électriques d'alimentation de la plaque de circuit imprimé.

Ainsi, les inductances de mode différentiel du module de désaccouplement électromagnétique de l'unité électronique de contrôle permettent de réduire un phénomène de couplage électromagnétique entre l'antenne radiofréquence filaire et les fils d'alimentation électrique du câble d'alimentation électrique, en présentant une forte impédance aux courants circulant sur ces fils d'alimentation électrique, ce phénomène de couplage électromagnétique étant induit par le rayonnement électromagnétique de l'antenne radiofréquence filaire.

Ceci permet de conserver les performances de rayonnement de l'antenne radiofréquence filaire par une réduction du couplage électromagnétique entre celle-ci et les fils d'alimentation électrique du câble d'alimentation électrique.

De cette manière, les performances radiofréquences de l'antenne radiofréquence filaire connectée électriquement au module de communication de l'unité électronique de contrôle ne sont pas dégradées par l'utilisation d'une antenne radiofréquence filaire non-blindée, par la présence des inductances de mode commun au niveau de l'unité électronique de contrôle et par la proximité des fils d'alimentation électrique du câble d'alimentation électrique par rapport à l'antenne radiofréquence filaire.

En outre, le passage de l'antenne radiofréquence filaire et des fils d'alimentation électrique du câble d'alimentation électrique au travers du support de couple de l'actionneur électromécanique ne nécessite qu'un volume de passage minimal dans le support de couple, puisque l'antenne radiofréquence filaire est non-blindée et les fils d'alimentation électrique du câble d'alimentation électrique peuvent être proches de l'antenne radiofréquence filaire, voire en contact avec celle-ci.

Selon une caractéristique avantageuse de l'invention, chacune des inductances de mode commun est reliée électriquement en série avec l'une des inductances de mode différentiel.

Selon une autre caractéristique avantageuse de l'invention, l'antenne radiofréquence filaire s'étend au moins en partie le long des fils d'alimentation électrique du câble d'alimentation électrique.

Selon une autre caractéristique avantageuse de l'invention, le dispositif d'alimentation en énergie électrique comprend au moins une batterie et un panneau photovoltaïque. Le câble d'alimentation électrique comprend des premiers fils d'alimentation électrique et des deuxièmes fils d'alimentation électrique. Les premiers fils d'alimentation électrique relient électriquement la batterie à l'unité électronique de contrôle. En outre, les deuxièmes fils d'alimentation électrique relient électriquement le panneau photovoltaïque à l'unité électronique de contrôle.

Selon une autre caractéristique avantageuse de l'invention, le câble d'alimentation électrique comprend une fiche électrique. L'actionneur électromécanique comprend, en outre, un dispositif de connexion électrique, le dispositif de connexion électrique étant monté à l'intérieur du carter. En outre, la fiche électrique est connectée électriquement au dispositif de connexion électrique.

Selon une autre caractéristique avantageuse de l'invention, le support de couple comprend, en outre, un logement. En outre, la fiche électrique du câble d'alimentation électrique est insérée à l'intérieur du logement du support de couple.

Selon une autre caractéristique avantageuse de l'invention, le dispositif de connexion électrique est enfiché sur un bord de la plaque de circuit imprimé.

Selon une autre caractéristique avantageuse de l'invention, le module de communication, les inductances de mode commun et les inductances de mode différentiel sont montées sur la plaque de circuit imprimé.

La présente invention vise, selon un deuxième aspect, un dispositif d'occultation comprenant au moins :

- un écran, et
- un dispositif d'entraînement motorisé.

Selon l'invention, le dispositif d'entraînement motorisé est conforme à l'invention et tel que mentionné ci-dessus. L'écran est configuré pour être entraîné en déplacement par l'actionneur électromécanique du dispositif d'entraînement motorisé.

Ce dispositif d'occultation présente des caractéristiques et avantages analogues à ceux décrits précédemment en relation avec le dispositif d'entraînement motorisé selon l'invention et tel que mentionné ci-dessus.

Selon une caractéristique avantageuse de l'invention, le dispositif d'occultation comprend, en outre, un tube d'enroulement. L'écran est enroulable sur le tube d'enroulement. En outre, le tube d'enroulement est agencé de sorte à être entraîné en rotation par l'actionneur électromécanique.

D'autres particularités et avantages de l'invention apparaîtront encore dans la description ci-après, faite en référence aux dessins annexés, donnés à titre d'exemples non limitatifs et dans lesquels :

[Fig 1] la figure 1 est une vue schématique en coupe transversale d'une installation conforme à un mode de réalisation de l'invention, l'installation comprenant un dispositif d'occultation conforme à l'invention ;
[Fig 2] la figure 2 est une vue schématique en perspective de l'installation illustrée à la figure 1 ;
[Fig 3] la figure 3 est une vue schématique en coupe axiale et partielle de l'installation illustrée aux figures 1 et 2, montrant un actionneur électromécanique d'un dispositif d'entraînement motorisé du dispositif d'occultation de l'installation ;

[Fig 4] la figure 4 est une vue schématique en coupe axiale et partielle de l'actionneur électromécanique illustré à la figure 3 ;

[Fig 5] la figure 5 est une vue schématique en perspective et éclatée d'une partie de l'actionneur électromécanique illustré aux figures 3 et 4 ;

[Fig 6] la figure 6 est une vue schématique de dessus d'une plaque de circuit imprimé d'une unité électronique de contrôle de l'actionneur électromécanique illustré aux figures 3 à 5 ; et

[Fig 7] la figure 7 est une vue schématique de dessous de la plaque de circuit imprimé illustrée à la figure 6.

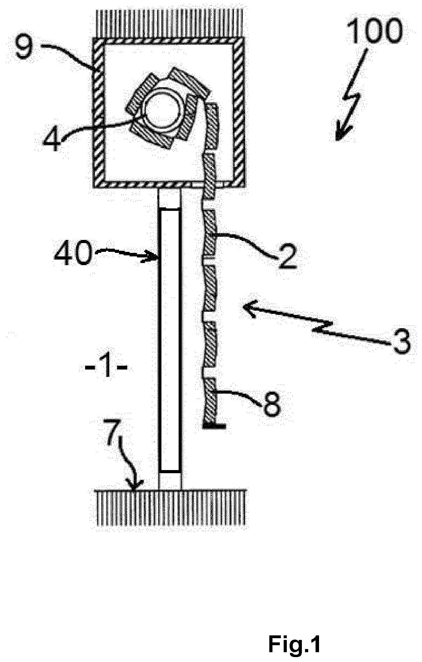

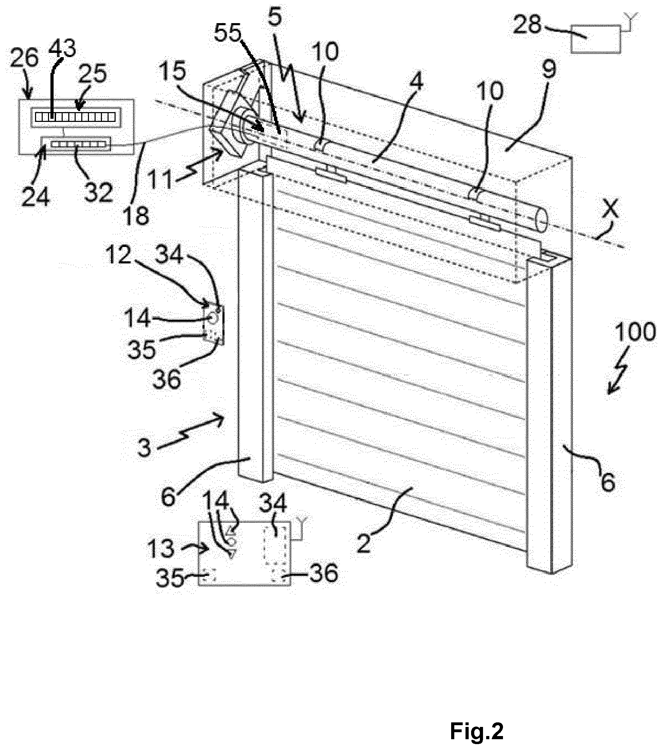

On décrit tout d'abord, en référence aux figures 1 et 2, une installation domotique 100 conforme à l'invention. Cette installation domotique 100 comprend au moins un dispositif de fermeture, d'occultation ou de protection solaire 3, conforme à un mode de réalisation l'invention. Cette installation domotique 100, installée dans un bâtiment, non représenté, comporte une ouverture 1, dans laquelle est disposée une fenêtre 40 ou une porte, qui n'est représentée qu'à la figure 1. Cette installation domotique 100 est équipée d'au moins un écran 2 appartenant au dispositif de fermeture, d'occultation ou de protection solaire 3, en particulier un volet roulant motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un volet roulant, un store en toile ou avec des lames orientables, un portail roulant, une grille, une porte ou encore un volet battant. La présente invention s'applique à tous les types de dispositif d'occultation.

On décrit, en référence aux figures 1 et 2, un volet roulant conforme au mode de réalisation de l'invention.

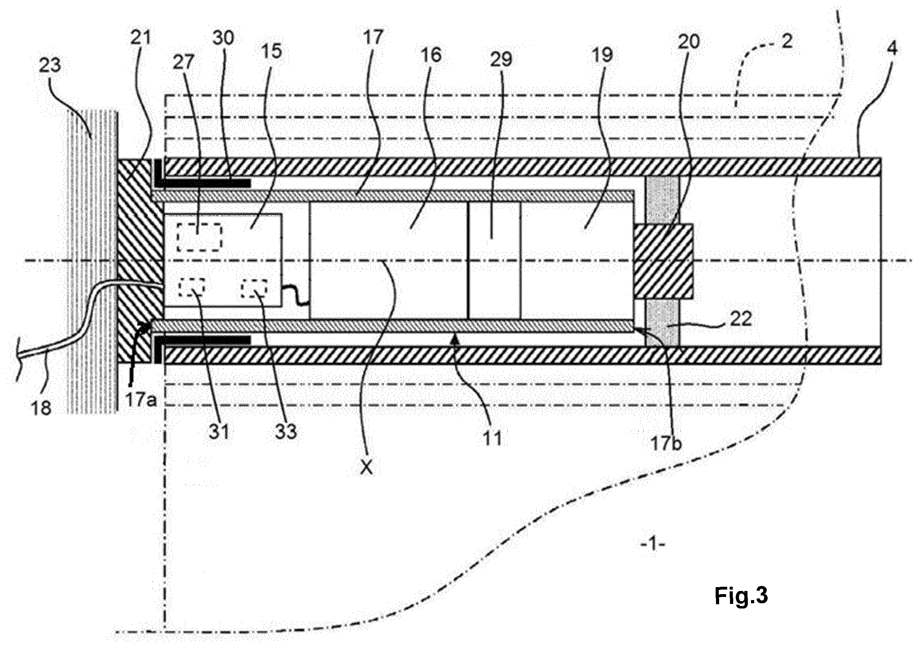

Le dispositif d'occultation 3 comprend un dispositif d'entraînement motorisé 5, conforme à l'invention. Le dispositif d'entraînement motorisé 5 comprend un actionneur électromécanique 11 illustré à la figure 3.

Avantageusement, le dispositif d'occultation 3 comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

L'actionneur électromécanique 11, en particulier de type tubulaire, permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux coulisses latérales 6, représentées uniquement à la figure 2. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, entre une position ouverte, correspondant à la position enroulée et pouvant également être appelée première position de fin de course ou position de fin de course haute FdCH, et une position fermée, correspondant à la position déroulée et pouvant également être appelée deuxième position de fin de course ou position de fin de course basse FdCB.

Ainsi, l'actionneur électromécanique 11 est configuré pour entraîner, autrement dit entraîne, en déplacement l'écran 2, entre la première position de fin de course FdCH et la deuxième position de fin de course FdCB, et inversement.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12 ou l'unité de commande centrale 13.

L'installation domotique 100 comprend soit l'unité de commande locale 12, soit l'unité de commande centrale 13, soit l'unité de commande locale 12 et l'unité de commande centrale 13.

On décrit à présent, plus en détail et en référence aux figures 3 à 5, le dispositif d'entraînement motorisé 5, y compris l'actionneur électromécanique 11, appartenant à l'installation domotique 100 et, plus particulièrement, au dispositif d'occultation 3 illustré aux figures 1 et 2.

L'actionneur électromécanique 11 comprend un moteur électrique 16.

Le moteur électrique 16 est représenté par son enveloppe à la figure 3, sans détails sur ses éléments constitutifs internes.

Avantageusement, le moteur électrique 16 comprend un rotor et un stator, non représentés et positionnés de manière coaxiale autour de l'axe de rotation X, qui est également l'axe de rotation du tube d'enroulement 4 en configuration montée du dispositif d'entraînement motorisé 5.

Ici, le moteur électrique 16 peut être de type sans balais à commutation électronique, appelé également « BLDC » (acronyme du terme anglo-saxon BrushLess Direct Current) ou « synchrone à aimants permanents », ou du type à courant continu.

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31.

Ici, le dispositif d'entraînement motorisé 5 comprend l'unité électronique de contrôle 15. En outre, l'unité électronique de contrôle 15 comprend le microcontrôleur 31.

L'unité électronique de contrôle 15 comprend, en outre, un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité électronique de contrôle 15, l'unité de commande locale 12 et/ou l'unité de commande centrale 13 peuvent être en communication avec une station météorologique, non représentée, disposée à l'intérieur du bâtiment ou déportée à l'extérieur du bâtiment, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment.

Avantageusement, l'unité électronique de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 et/ou centrale 13. L'unité de commande locale 12 et/ou centrale 13 est pourvue d'un clavier de commande. Le clavier de commande de l'unité de commande locale 12 ou centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou centrale 13 comprend au moins un deuxième module de communication 36.

Ainsi, le deuxième module de communication 36 de l'unité de commande locale 12 ou centrale 13 est configuré pour émettre, autrement dit émet, des ordres de commande, par des moyens sans fil, par exemple radioélectriques, ou, éventuellement, par des moyens filaires.

En outre, le deuxième module de communication 36 de l'unité de commande locale 12 ou centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou centrale 13 est configuré pour communiquer, autrement dit communique, avec le premier module de communication 27 de l'unité électronique de contrôle 15.

Ainsi, le deuxième module de communication 36 de l'unité de commande locale 12 ou centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade d'un mur du bâtiment ou sur une face d'un cadre dormant de la fenêtre 40 ou d'une porte. Un point de commande nomade peut être une télécommande, un téléphone intelligent ou une tablette.

Avantageusement, l'unité de commande locale 12 et/ou centrale 13 comprend, en outre, un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou centrale 13.

Le dispositif d'entraînement motorisé 5 peut également être contrôlé automatiquement, par exemple par la réception d'un ordre de commande correspondant à au moins un signal provenant d'au moins un capteur, non représenté, et/ou à un signal provenant d'une horloge, non représentée, de l'unité électronique de contrôle 15, en particulier du microcontrôleur 31. Le capteur et/ou l'horloge peuvent, en variante, être intégrés à l'unité de commande locale 12 ou à l'unité de commande centrale 13.

L'actionneur électromécanique 11 comprend, en outre, un carter 17, en particulier tubulaire. Le moteur électrique 16 est monté à l'intérieur du carter 17, autrement dit est logé à l'intérieur du carter 17, en particulier dans une configuration assemblée de l'actionneur électromécanique 11.

Ici, le carter 17 de l'actionneur électromécanique 11 est de forme cylindrique, notamment de révolution autour de l'axe de rotation X.

Avantageusement, le carter 17 est un tube.

Ici, le tube formant le carter 17 présente une section circulaire.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Le carter 17 est creux. Le carter 17 comprend une première extrémité 17a et une deuxième extrémité 17b. La deuxième extrémité 17b est opposée à la première extrémité 17a. Le carter 17 est ouvert à chacune de ses extrémités 17a, 17b.

Avantageusement, l'actionneur électromécanique 11 comprend, en outre, un arbre de sortie 20.

L'arbre de sortie 20 est disposé, autrement dit est configuré pour être disposé, au niveau de la deuxième extrémité 17b du carter 17, en particulier dans la configuration assemblée de l'actionneur électromécanique 11.

Avantageusement, l'actionneur électromécanique 11 comprend, en outre, un réducteur 19.

Le réducteur 19 est représenté par son enveloppe à la figure 3, sans détails sur ses éléments constitutifs internes.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Le réducteur 19 est accouplé, autrement dit est configuré pour être accouplé, avec le moteur électrique 16, en particulier avec le rotor du moteur électrique 16, dans la configuration assemblée de l'actionneur électromécanique 11.

Avantageusement, l'actionneur électromécanique 11 comprend, en outre, un frein 29.

A titre d'exemples nullement limitatifs, le frein 29 peut être un frein à ressort, un frein à came, un frein magnétique ou un frein électromagnétique.

Ici et comme visible à la figure 3, en particulier dans la configuration assemblée de l'actionneur électromécanique 11, le frein 29 est configuré pour être disposé, autrement dit est disposé, entre le moteur électrique 16 et le réducteur 19, c'est-à-dire à la sortie du moteur électrique 16.

En variante, non représentée, le frein 29 est configuré pour être disposé, autrement dit est disposé, en particulier dans la configuration assemblée de l'actionneur électromécanique 11, entre l'unité électronique de contrôle 15 et le moteur électrique 16, autrement dit à l'entrée du moteur électrique 16, entre le réducteur 19 et l'arbre de sortie 20, autrement dit à la sortie du réducteur 19, ou entre deux étages de réduction du réducteur 19.

Avantageusement, le réducteur 19 et, éventuellement, le frein 29 sont disposés à l'intérieur du carter 17 de l'actionneur électromécanique 11, en particulier dans la configuration assemblée de l'actionneur électromécanique 11.

Avantageusement, l'actionneur électromécanique 11 comprend, en outre, une couronne 30. La couronne 30 est disposée, autrement dit est configurée pour être disposée, au niveau de la première extrémité 17a du carter 17, en particulier dans la configuration assemblée de l'actionneur électromécanique 11.

La couronne 30 constitue, autrement dit est configurée pour constituer, un palier de guidage en rotation du tube d'enroulement 4, en particulier dans une configuration assemblée du dispositif d'occultation 3.

Avantageusement, l'actionneur électromécanique 11 et, plus particulièrement, l'unité électronique de contrôle 15 comprend, en outre, un dispositif, non représenté, de détection d'obstacle et de fins de course, lors de l'enroulement de l'écran 2 et lors du déroulement de cet écran 2, ce dispositif de détection pouvant être mécanique ou électronique.

Avantageusement, le dispositif de détection d'obstacle et de fins de course est mis en œuvre au moyen du microcontrôleur 31 de l'unité électronique de contrôle 15 et, en particulier, au moyen d'un algorithme mis en oeuvre par ce microcontrôleur 31.

Le tube d'enroulement 4 est entraîné en rotation autour de l'axe de rotation X et autour du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 30 insérée autour de la première extrémité 17a du carter 17 de l'actionneur électromécanique 11. La couronne 30 permet ainsi de réaliser un palier. La deuxième liaison pivot, non représentée à la figure 3, est réalisée au niveau d'une deuxième extrémité du tube d'enroulement 4, non visible sur cette figure.

L'actionneur électromécanique 11 comprend, en outre, un support de couple 21, pouvant également être appelé « tête d'actionneur » ou « point fixe ».

Le support de couple 21 obture, autrement dit est configuré pour obturer, la première extrémité 17a du carter 17, en particulier dans la configuration assemblée de l'actionneur électromécanique 11.

Ainsi, le support de couple 21 est disposé, autrement dit est configuré pour être disposé, au niveau de la première extrémité 17a du carter 17.

Avantageusement, le support de couple 21 est monté au moins en partie à l'intérieur du carter 17.

Avantageusement, le support de couple 21 est en saillie, au niveau de la première extrémité 17a du carter 17, en particulier l'extrémité 17a du carter 17 recevant la couronne 30.

Ainsi, une première partie du support de couple 21 est disposée à l'intérieur du carter 17 et une deuxième partie du support de couple 21 est disposée à l'extérieur du carter 17.

Avantageusement, le support de couple 21 de l'actionneur électromécanique 11 est configuré pour fixer l'actionneur électromécanique 11 sur un bâti 23, en particulier sur une joue du coffre 9.

Ainsi, le support de couple 21 permet de reprendre les efforts exercés par l'actionneur électromécanique 11, en particulier le couple exercé par l'actionneur électromécanique 11, par rapport à la structure du bâtiment. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment.

Le support de couple 21 est fixé, autrement dit est configuré pour être fixé, au carter 17 au moyen d'un ou plusieurs éléments de fixation, en particulier dans la configuration assemblée de l'actionneur électromécanique 11. Le ou les éléments de fixation peuvent être, notamment, des bossages, des vis de fixation, des éléments de fixation par encliquetage élastique, des nervures emmanchées dans des échancrures ou une combinaison de ces différents éléments de fixation.

Par ailleurs, le support de couple 21 de l'actionneur électromécanique 11 peut permettre de supporter au moins une partie de l'unité électronique de contrôle 15.

Le dispositif d'entraînement motorisé 5 comprend au moins un câble d'alimentation électrique 18.

L'unité électronique de contrôle 15 est alimentée en énergie électrique, autrement dit est configurée pour être alimentée en énergie électrique, au moyen du câble d'alimentation électrique 18, en particulier dans une configuration assemblée du dispositif d'entraînement motorisé 5.

L'actionneur électromécanique 11 comprend, en outre, l'unité électronique de contrôle 15. Autrement dit, l'unité électronique de contrôle 15 fait partie intégrante de l'actionneur électromécanique 11.

Avantageusement, l'unité électronique de contrôle 15 est montée au moins en partie à l'intérieur du carter 17.

Ici et tel qu'illustré à la figure 3, l'unité électronique de contrôle 15 est montée, autrement dit est logée, complètement à l'intérieur du carter 17 de l'actionneur électromécanique 11.

En variante, non représentée, l'unité électronique de contrôle 15 peut être disposée dans le support de couple 21.

Avantageusement, le support de couple 21 peut comprendre au moins un bouton, non représenté.

Ce ou ces boutons peuvent permettre de réaliser un réglage de l'actionneur électromécanique 11 au travers d'un ou plusieurs modes de configuration, d'appairer avec l'actionneur électromécanique 11 une ou plusieurs unités de commande 12, 13, de réinitialiser un ou plusieurs paramètres, pouvant être, par exemple, une position de fin de course, de réinitialiser la ou les unités de commande 12, 13 appairées ou encore de commander le déplacement de l'écran 2.

Avantageusement, le support de couple 21 peut comprendre au moins un dispositif d'affichage, non représenté, de sorte à permettre une indication visuelle d'un paramètre de fonctionnement du dispositif d'entraînement motorisé 5.

Avantageusement, le dispositif d'affichage comprend au moins une source d'éclairage, non représentée, en particulier une diode électroluminescente.

Cette ou ces sources d'éclairage sont montées sur une carte électronique de l'unité électronique de contrôle 15 et, éventuellement, un capot transparent ou translucide et/ou un guide de lumière est ou sont prévus, pour permettre le passage de la lumière émise par la ou chacune des sources d'éclairage.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à la deuxième extrémité 17b du carter 17 opposée à la première extrémité 17a.

Avantageusement, l'arbre de sortie 20 de l'actionneur électromécanique 11 est configuré pour entraîner en rotation un élément de liaison 22. Cet élément de liaison 22 est relié au tube d'enroulement 4, en particulier dans la configuration assemblée du dispositif d'occultation 3. L'élément de liaison est, dans l'exemple des figures, réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

Le dispositif d'occultation 3 et, plus particulièrement, le dispositif d'entraînement motorisé 5 comprend, en outre, un dispositif d'alimentation en énergie électrique 26, visible à la figure 2. L'actionneur électromécanique 11 est relié électriquement au dispositif d'alimentation en énergie électrique 26.

Ici, le dispositif d'alimentation en énergie électrique 26 comprend au moins une batterie 24.

La batterie 24 fournit, autrement dit est configuré pour fournir ou délivrer, une tension $V_{bat}$.

Avantageusement, le dispositif d'alimentation en énergie électrique 26 comprend, en outre, au moins un panneau photovoltaïque 25.

Le panneau photovoltaïque 25 fournit, autrement dit est configuré pour fournir ou délivrer, une tension $V_{pv}$.

Avantageusement, le panneau photovoltaïque 25 peut être fixé sur le coffre 9, sur un mur du bâtiment, sur l'une des coulisses latérales 6, sur une vitre de la fenêtre 40 ou sur un cadre dormant de la fenêtre 40.

Le dispositif d'alimentation en énergie électrique 26 est configuré pour alimenter, autrement dit alimente, en énergie électrique l'actionneur électromécanique 11 et, plus particulièrement, l'unité électronique de contrôle 15 et le moteur électrique 16, au moyen du câble d'alimentation électrique 18.

Dans le cas où le dispositif d'alimentation en énergie électrique 26 comprend la batterie 24 et, éventuellement, le panneau photovoltaïque 25, celui-ci permet d'alimenter en énergie électrique l'actionneur électromécanique 11, sans être lui-même relié électriquement à un réseau d'alimentation électrique du secteur.

Ici, le panneau photovoltaïque 25 est relié électriquement à la batterie 24, par une liaison électrique.

L'actionneur électromécanique 11 est relié électriquement au dispositif d'alimentation en énergie électrique 26 et, plus particulièrement, à la batterie 24, en particulier au moyen du câble d'alimentation électrique 18.

La batterie 24 est configurée pour alimenter, autrement dit alimente, en énergie électrique l'actionneur électromécanique 11, en particulier l'unité électronique de contrôle 15 et le moteur électrique 16.

Avantageusement, la batterie 24 est configurée pour être alimentée, autrement dit est alimentée, en énergie électrique par le panneau photovoltaïque 25.

Ainsi, le rechargement de la batterie 24 est mis en œuvre par énergie solaire, au moyen du panneau photovoltaïque 25.

Avantageusement, la batterie 24 peut être disposée au niveau du coffre 9 du dispositif d'occultation 3.

Ici et comme illustré à la figure 2, la batterie 24 est disposée à l'extérieur du coffre 9.

En variante, non représentée, la batterie 24 peut être disposée à l'intérieur du coffre 9, à l'intérieur du tube d'enroulement 4 tout en étant à l'extérieur du carter 17, ou à l'intérieur du carter 17, dans la configuration assemblée de l'actionneur électromécanique 11. Dans ce dernier cas, l'actionneur électromécanique 11 comprend la batterie 24.

Lorsque le support de couple 21 comprend un dispositif d'affichage, le paramètre de fonctionnement que ce dispositif d'affichage permet de visualiser est avantageusement un état de charge de la batterie 24.

Ici, l'actionneur électromécanique 11 comprend le câble d'alimentation électrique 18 permettant son alimentation en énergie électrique, notamment l'alimentation électrique de l'unité électronique de contrôle 15 et l'alimentation électrique du moteur électrique 16, en particulier à partir de la batterie 24.

Ici, la batterie 24 est reliée électriquement directement à l'unité électronique de contrôle 15, par le câble d'alimentation électrique 18.

La batterie 24 est de type rechargeable.

Avantageusement, la batterie 24 comprend une pluralité d'éléments de stockage d'énergie 32, en particulier reliés électriquement en série. Les éléments de stockage d'énergie 32 de la batterie 24 peuvent être, notamment, des piles, autrement dit des accumulateurs.

Avantageusement, le panneau photovoltaïque 25 comprend une pluralité de cellules photovoltaïques 43. Dans ce cas, la batterie 24 est alimentée en énergie électrique au moyen des cellules photovoltaïques 43 du panneau photovoltaïque 25.

Le dispositif d'entraînement motorisé 5, en particulier le panneau photovoltaïque 25 et/ou l'unité électronique de contrôle 15, comprend des éléments de chargement configurés pour charger la batterie 24, à partir de l'énergie solaire récupérée par le panneau photovoltaïque 25. Dans ce cas, le courant circule entre les composants 15, 24 et 25 à travers une liaison filaire, au moyen du câble d'alimentation en énergie électrique 18.

Ainsi, les éléments de chargement configurés pour charger la batterie 24, à partir de l'énergie solaire, permettent de convertir l'énergie solaire récupérée par le panneau photovoltaïque 25 en énergie électrique.

Ici, l'unité électronique de contrôle 15 comprend une seule carte électronique 55. En outre, la carte électronique 55 est configurée pour contrôler le moteur électrique 16, pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Comme mentionné ci-dessus, les éléments de chargement de la batterie 24 peuvent être disposés au niveau de la carte électronique 55.

En variante, non représentée, l'unité électronique de contrôle 15 comprend une première carte électronique et une deuxième carte électronique. La première carte électronique est configurée pour contrôler, autrement dit contrôle, le moteur électrique 16. En outre, la deuxième carte électronique est configurée pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Les éléments de chargement de la batterie 24 peuvent être disposés au niveau de la deuxième carte électronique.

Dans le cas où l'unité électronique de contrôle 15 comprend une première carte électronique et une deuxième carte électronique, non représentées, la première carte électronique de l'unité électronique de contrôle 15 peut être disposée à l'intérieur du carter 17 de l'actionneur électromécanique 11. En outre, la deuxième carte électronique peut être disposée à l'intérieur du support de couple 21 de l'actionneur électromécanique 11. Par ailleurs, le support de couple 21 peut comprendre un couvercle, non représenté. En outre, la deuxième carte électronique peut être disposée à l'intérieur d'un logement formé entre une partie du support de couple 21 et le couvercle.

L'unité électronique de contrôle 15 et, plus particulièrement, la carte électronique 55 comprend, en outre, une plaque de circuit imprimé 46.

Avantageusement, l'actionneur électromécanique 11 comprend, en outre, un boîtier 33, pouvant également être appelé une « cage ». Le boîtier 33 est monté, autrement dit est configuré pour être monté, à l'intérieur du carter 17, en particulier dans la configuration assemblée de l'actionneur électromécanique 11.

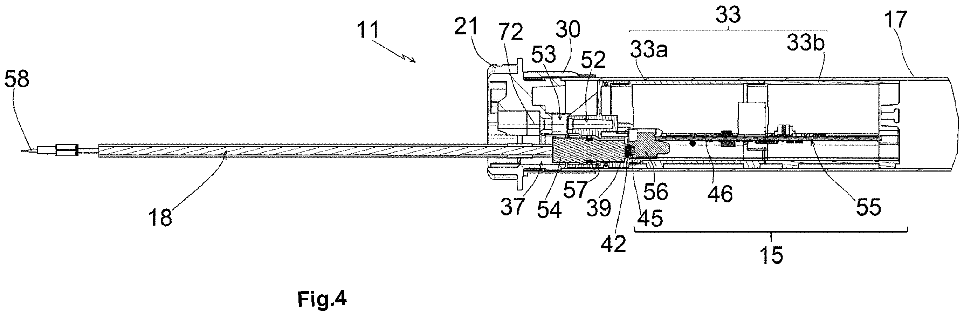

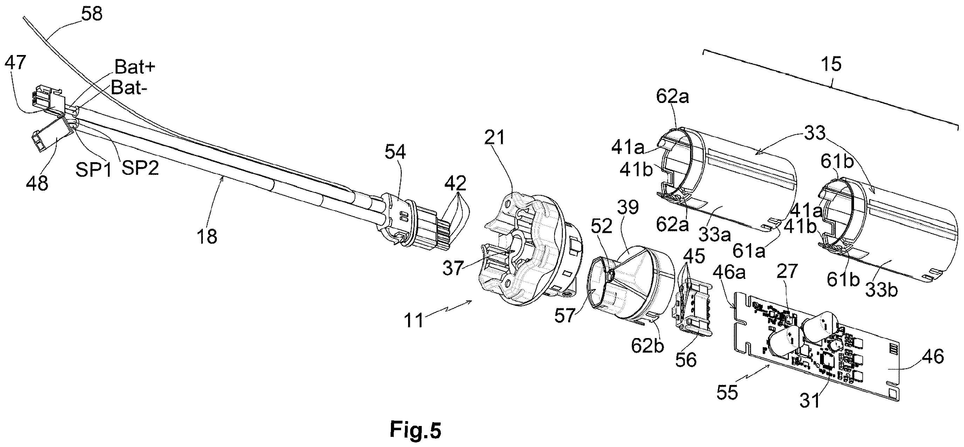

Ici et comme illustré aux figures 4 et 5, l'unité électronique de contrôle 15 comprend la carte électronique 55 et le boîtier 33. En outre, le boîtier 33 reçoit, autrement dit est configuré pour recevoir, la carte électronique 55, en particulier dans la configuration assemblée de l'actionneur électromécanique 11.

Ainsi, le boîtier 33 de l'unité électronique de contrôle 15 permet de protéger la carte électronique 55, lors de l'assemblage de l'actionneur électromécanique 11 et suite à l'assemblage de ce dernier.

Avantageusement, le boîtier 33 est réalisé en matériau électriquement isolant, notamment dans une matière plastique.

Ainsi, le boîtier 33 de l'unité électronique de contrôle 55 permet d'isoler électriquement la carte électronique 55 par rapport au carter 17.

Avantageusement, le diamètre extérieur du boîtier 33 de l'unité électronique de contrôle 15 est inférieur au diamètre intérieur du carter 17, de sorte que le boîtier 33 peut être inséré dans le carter 17, lors de l'assemblage de l'actionneur électromécanique 11.

Ici et comme illustré aux figures 4 et 5, le boîtier 33 de l'unité électronique de contrôle 15 comprend deux tronçons 33a, 33b, chaque tronçon 33a, 33b étant réalisé sous la forme d'un tube creux. En outre, chaque tronçon 33a, 33b est configuré pour loger ou recevoir, autrement dit loge ou reçoit, une partie de la carte électronique 55, en particulier dans une configuration assemblée de l'unité électronique de contrôle 15.

Dans un tel cas, chaque tronçon 33a, 33b du boîtier 33 comprend une première rainure 41a et une deuxième rainure 41b. En outre, les première et deuxième rainures 41a, 41b sont configurées pour maintenir en position, autrement dit maintiennent en position, la carte électronique 55, notamment la plaque de circuit imprimé 46, à l'intérieur du boîtier 33, en particulier dans la configuration assemblée de l'unité électronique de contrôle 15.

Avantageusement, les tronçons 33a, 33b du boîtier 33 sont fixés ensemble, autrement dit sont configurés pour être fixés ensemble, au moyen d'éléments de fixation 61a, 61b, en particulier dans la configuration assemblée de l'unité électronique de contrôle 15.

Ainsi, les éléments de fixation 61a, 61b des tronçons 33a, 33b du boîtier 33 permettent de solidariser en rotation et en translation ces tronçons 33a, 33b entre eux.

Ici et comme illustré à la figure 5, les éléments de fixation 61a, 61b des tronçons 33a, 33b du boîtier 33 sont des éléments de fixation par encliquetage élastique.

Avantageusement, le boîtier 33 est fixé, autrement dit est configuré pour être fixé, au support de couple 21, en particulier dans la configuration assemblée de l'actionneur électromécanique 11.

Avantageusement, l'actionneur électromécanique 11 comprend, en outre, un élément d'interface 39. En outre, l'élément d'interface 39 est disposé entre le support de couple 21 et l'unité électronique de contrôle 15, en particulier dans la configuration assemblée de l'actionneur électromécanique 11.

Ici et comme illustré aux figures 4 et 5, le boîtier 33 est fixé, autrement dit est configuré pour être fixé, au support de couple 21, par l'intermédiaire de l'élément d'interface 39, au moyen d'au moins un élément de fixation 72, en particulier dans la configuration assemblée de l'actionneur électromécanique 11.

Avantageusement, l'élément d'interface 39 comprend un fût de vissage 52. Le support de couple 21 comprend un trou de passage 53. L'élément de fixation 72 est une vis, représentée par son trait d'axe à la figure 4. En outre, la vis est insérée, autrement dit est configurée pour être insérée, au travers du trou de passage 53 ménagé dans le support de couple 21 et vissée, autrement dit est configurée pour être vissée, dans le fût de vissage 52 de l'élément d'interface 39, en particulier dans la configuration assemblée de l'actionneur électromécanique 11.

Ici, le trou de passage 53 ménagé dans le support de couple 21 et le fût de vissage 52 de l'élément d'interface 39 sont centrés, autrement dit sont configurés pour être centrés, sur l'axe de rotation X, en particulier dans la configuration assemblée de l'actionneur électromécanique 11. L'axe de la vis et l'axe de rotation X sont confondus dans la configuration assemblée de l'actionneur électromécanique 11.

Avantageusement, l'élément d'interface 39 et le boîtier 33, en particulier l'un des tronçons 33a, 33b du boîtier 33, sont fixés ensemble, autrement dit sont configurés pour être fixés ensemble, au moyen d'éléments de fixation 62a, 62b, en particulier dans la configuration assemblée de l'unité électronique de contrôle 15.

Ainsi, les éléments de fixation 62a, 62b de l'élément d'interface 39 avec le boîtier 33 permettent de solidariser en rotation et en translation l'élément d'interface 39 par rapport au boîtier 33.

Ici et comme illustré à la figure 5, les éléments de fixation 62a, 62b de l'élément d'interface 39 avec le boîtier 33 sont des éléments de fixation par encliquetage élastique.

Avantageusement, le câble d'alimentation électrique 18 comprend une fiche électrique 54, pouvant également être appelée « prise électrique ». L'actionneur électromécanique 11 comprend, en outre, un dispositif de connexion électrique 56. Le dispositif de connexion électrique 56 est monté, autrement dit est configuré pour être monté, à l'intérieur du carter 17, en particulier dans la configuration assemblée de l'actionneur électromécanique 11. En outre, la fiche électrique 54 est connectée électriquement, autrement dit est configurée pour être connectée électriquement, au dispositif de connexion électrique 56, en particulier dans la configuration assemblée du dispositif d'entraînement motorisé 5.

Avantageusement, le dispositif de connexion électrique 56 est enfiché sur un bord 46a de la plaque de circuit imprimé 46.

Avantageusement, le support de couple 21 comprend, en outre, un logement 37. En outre, la fiche électrique 54 du câble d'alimentation électrique 18 est insérée, autrement dit est configurée pour être insérée, à l'intérieur du logement 37 du support de couple 21, en particulier dans la configuration assemblée du dispositif d'entraînement motorisé 5.

Ainsi, la fiche électrique 54 du câble d'alimentation électrique 18 est disposée dans le logement 37 du support de couple 21 lors de la connexion électrique de la fiche électrique 54 avec le dispositif de connexion électrique 56 de l'actionneur électromécanique 11.

Ici et comme illustré aux figures 4 et 5, l'élément d'interface 59 comprend, en outre, un logement 57. En outre, la fiche électrique 54 du câble d'alimentation électrique 18 est insérée, autrement dit est configurée pour être insérée, à l'intérieur du logement 57 de l'élément d'interface 39, en particulier dans la configuration assemblée du dispositif d'entraînement motorisé 5.

Ainsi, la fiche électrique 54 du câble d'alimentation électrique 18 est disposée dans le logement 57 de l'élément d'interface 39 lors de la connexion électrique de la fiche électrique 54 avec le dispositif de connexion électrique 56 de l'actionneur électromécanique 11.

Avantageusement, le trou de passage 53 du support de couple 21 peut être disposé dans le prolongement d'une partie du logement 37 du support de couple 21, en particulier suivant une direction parallèle à l'axe de rotation X.

Ainsi, l'élément d'interface 39 est fixé au support de couple 21 avant l'introduction de la fiche électrique 54 dans le logement 37 du support de couple 21.

Le dispositif d'entraînement motorisé 5 comprend, en outre, une antenne radiofréquence filaire 58. En outre, l'antenne radiofréquence filaire 58 est non-blindée.

Ici, l'antenne radiofréquence filaire 58 est réalisée au moyen d'un câble métallique, pouvant être, par exemple, en cuivre ou en aluminium. En outre, ce câble métallique peut être recouvert d'une gaine d'isolation électrique, autrement dit est logé dans une gaine d'isolation électrique, pouvant être, par exemple, en matière plastique.

L'antenne radiofréquence filaire 58 est reliée électriquement, autrement dit est configurée pour être reliée électriquement, au premier module de communication 27 de l'unité électronique de contrôle 15, en particulier dans la configuration assemblée du dispositif d'entraînement motorisé 5.

L'antenne radiofréquence filaire 58 s'étend au travers du support de couple 21, et dans le cas présent au travers de l'élément d'interface 39, et est reliée électriquement à une première piste électrique 59 de la plaque de circuit imprimé 46, en particulier au moyen de la fiche électrique 54 et du dispositif de connexion électrique 56.

La première piste électrique 59 de la plaque de circuit imprimé 46 peut également être appelée une première entrée de la plaque de circuit imprimé 46, ou encore une entrée radiofréquence de la plaque de circuit imprimé 46.

Le câble d'alimentation électrique 18 comprend des fils d'alimentation électrique Bat+, Bat-, SP1, SP2.

Avantageusement, dans le cas où le dispositif d'alimentation en énergie électrique 26 comprend la batterie 24 et le panneau photovoltaïque 25, le câble d'alimentation électrique 18 comprend des premiers fils d'alimentation électrique Bat+, Bat- et des deuxièmes fils d'alimentation électrique SP1, SP2. Les premiers fils d'alimentation électrique Bat+, Bat- relient électriquement la batterie 24 à l'unité électronique de contrôle 15. En outre, les deuxièmes fils d'alimentation électrique SP1, SP2 relient électriquement le panneau photovoltaïque 25 à l'unité électronique de contrôle 15.

Chacun des fils d'alimentation électrique Bat+, Bat-, SP1, SP2 du câble d'alimentation électrique 18 s'étend au travers du support de couple 21, et dans le cas présent au travers de l'élément d'interface 39, et est relié électriquement à une deuxième piste électrique d'alimentation 60 de la plaque de circuit imprimé 46, en particulier au moyen de la fiche électrique 54 et du dispositif de connexion électrique 56.

Chacune des deuxièmes pistes électriques d'alimentation 60 de la plaque de circuit imprimé 46 peut également être appelée une deuxième entrée de la plaque de circuit imprimé 46, ou encore une entrée d'alimentation de la plaque de circuit imprimé 46.

Ici et comme illustré à la figure 5, les premiers fils d'alimentation électrique Bat+, Bat- sont maintenus ensemble dans une première gaine d'isolation électrique, autrement dit sont logés dans une même gaine d'isolation électrique, pouvant être, par exemple, en matière plastique. En outre, les deuxièmes fils d'alimentation électrique SP1, SP2 sont maintenus ensemble dans une deuxième gaine d'isolation électrique, autrement dit sont logés dans une même gaine d'isolation électrique, pouvant être, par exemple, en matière plastique. La deuxième gaine d'isolation électrique des deuxièmes fils d'alimentation électrique SP1, SP2 est distincte de la première gaine d'isolation électrique des premiers fils d'alimentation électrique Bat+, Bat-.

En variante, non représentée, les premiers fils d'alimentation électrique Bat+, Bat- et les deuxièmes fils d'alimentation électrique SP1, SP2 sont maintenus ensemble dans une même gaine d'isolation électrique, autrement dit sont logés dans une même gaine d'isolation électrique, pouvant être, par exemple, en matière plastique.

Avantageusement, le câble d'alimentation électrique 18 comprend un premier connecteur électrique 47 et, éventuellement, un deuxième connecteur électrique 48. Le premier connecteur électrique 47 du câble d'alimentation électrique 18 est relié électriquement, autrement dit est configuré pour être relié électriquement à un connecteur électrique, non représenté, de la batterie 24, en particulier dans la configuration assemblée du dispositif d'entraînement motorisé 5. En outre, le deuxième connecteur électrique 48 du câble d'alimentation électrique 18 est relié électriquement, autrement dit est configuré pour être relié électriquement à un connecteur électrique, non représenté, du panneau photovoltaïque 25, en particulier dans la configuration assemblée du dispositif d'entraînement motorisé 5.

Ici et comme illustré à la figure 5, chacun des premiers fils d'alimentation électrique Bat+, Bat- est relié électriquement au premier connecteur électrique 47 du câble d'alimentation électrique 18. En outre, chacun des deuxièmes fils d'alimentation électrique SP1, SP2 est relié électriquement au deuxième connecteur électrique 48 du câble d'alimentation électrique 18.

Avantageusement, la fiche électrique 54 comprend au moins des premiers éléments de connexion électrique 42. En outre, les premiers éléments de connexion électrique 42 de la fiche électrique 54 sont reliés électriquement, autrement dit sont configurés pour être reliés électriquement, d'une part, aux fils d'alimentation électrique Bat+, Bat-, SP1, SP2 du câble d'alimentation électrique 18 et, d'autre part, à l'antenne radioélectrique filaire 58.

Ici, les premiers éléments de connexion électrique 42 de la fiche électrique 54 sont des cosses électriques.

Avantageusement, le dispositif de connexion électrique 56 comprend des deuxièmes éléments de connexion électrique 45. Ici, les deuxièmes éléments de connexion électrique 45 du dispositif de connexion électrique 56 sont des broches électriques.

Les deuxièmes éléments de connexion électrique 45 du dispositif de connexion électrique 56 sont en contact électrique, autrement dit sont configurés pour être en contact électrique, avec la première piste électrique 59 et avec les deuxièmes pistes électriques d'alimentation 60 de la plaque de circuit imprimé 46, lorsque le dispositif de connexion électrique 56 est assemblé sur la plaque de circuit imprimé 46, en particulier dans la configuration assemblée de l'actionneur électromécanique 11. En outre, lorsque la fiche électrique 54 est assemblée avec le dispositif de connexion électrique 56, les premiers éléments de connexion électrique 42 de la fiche électrique 54 sont reliés électriquement, autrement dit sont configurés pour être reliés électriquement, aux deuxièmes éléments de connexion électrique 45 du dispositif de connexion électrique 56.

Ainsi, lorsque la fiche électrique 54 est introduite dans le logement 37 du support de couple 21, et dans le cas présent dans le logement 57 de l'élément d'interface 39, les premiers éléments de connexion électrique 42 de la fiche électrique 54 sont insérés, autrement dit sont configurés pour être insérés, dans les deuxièmes éléments de connexion électrique 45 du dispositif de connexion électrique 56, en particulier dans la configuration assemblée du dispositif d'entraînement motorisé 5.

Avantageusement, l'un des deux deuxièmes fils d'alimentation électrique SP1, SP2, en l'occurrence le deuxième fil d'alimentation électrique référencé SP1, est relié électriquement à l'un des premiers fils d'alimentation électrique Bat+, Bat-, en l'occurrence le premier fil d'alimentation électrique référencé Bat-.

Ainsi, la connexion électrique du deuxième fil d'alimentation électrique SP1 avec le premier fil d'alimentation électrique Bat- permet de réduire le nombre de fils d'alimentation électrique à l'intérieur du câble d'alimentation électrique 18 et, plus particulièrement, au niveau de la fiche électrique 54.

De cette manière, le logement 37 ménagé dans le support de couple 21, et dans le cas présent le logement 57 ménagé dans l'élément d'interface 39, à l'intérieur duquel est inséré la fiche électrique 54 du câble d'alimentation électrique 18 présente des dimensions réduites, du fait de la diminution du nombre de fils d'alimentation électrique Bat+, Bat-, SP1, SP2 à l'intérieur du câble d'alimentation électrique 18 et, plus particulièrement, de la fiche électrique 54 du câble d'alimentation électrique 18.

Ici, la connexion électrique du deuxième fil d'alimentation électrique SP1 avec le premier fil d'alimentation électrique Bat- est réalisée à l'intérieur de la fiche électrique 54 du câble d'alimentation électrique 18 au moyen d'une cosse électrique, non représentée.

Avantageusement, l'unité électronique de contrôle 15, en particulier la carte électronique 55, comprend un module d'alimentation électrique 51. En outre, module d'alimentation électrique 51 alimente en énergie électrique, autrement dit est configuré pour alimenter en énergie électrique, de manière séquentielle, des bobines, non représentées, du moteur électrique 16, de sorte à produire un champ électromagnétique tournant provoquant l'entraînement en rotation du rotor du moteur électrique 16.

Avantageusement, le module d'alimentation électrique 51 comprend des commutateurs 61. En outre, les commutateurs 61 permettent de réaliser l'alimentation électrique séquentielle des bobines du moteur électrique 16.

Ici, les commutateurs 61 du module d'alimentation électrique 51 sont des transistors de type « MOSFET » (acronyme du terme anglo-saxon Metal Oxide Semiconductor Field Effect Transistor), et au nombre de six.

Le type de commutateurs du module d'alimentation électrique et leur nombre ne sont pas limitatifs.

En variante, les commutateurs 61 du module d'alimentation électrique 51 peuvent être des transistors de type « IGBT » (acronyme du terme anglo-saxon Insulated Gâte Bipolar Transistor).

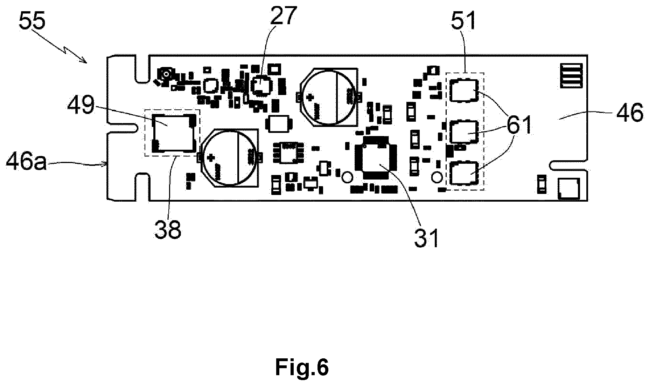

Ici et comme illustré à la figure 6, les commutateurs 61 sont représentés par trois blocs, autrement dit par trois composants électroniques, regroupant chacun deux commutateurs 61.

On décrit à présent, en référence aux figures 4 à 7, une partie du schéma électrique du dispositif d'entraînement motorisé 5 illustré aux figures 1 à 3, conforme à un mode de réalisation de l'invention.

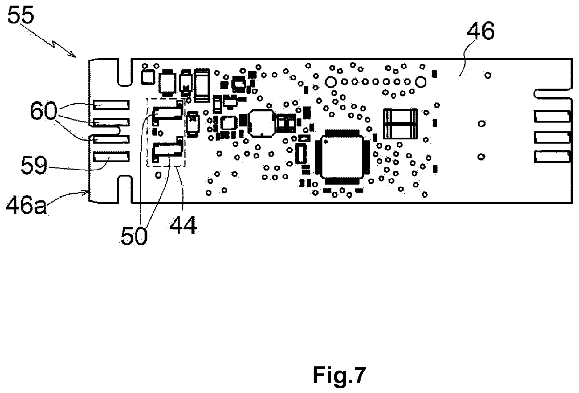

L'unité électronique de contrôle 15 comprend, en outre, un module de filtrage électromagnétique 38 et un module de désaccouplement électromagnétique 44, représentés uniquement et respectivement aux figures 6 et 7 pour la clarté du dessin.

Le module de filtrage électromagnétique 38 comprend des inductances de mode commun 49, couplées entre elles. Chacune des inductances de mode de commun 49 est reliée électriquement à l'une des deuxièmes pistes électriques d'alimentation 60 de la plaque de circuit imprimé 46.

Ici et comme illustré à la figure 6, les inductances de mode commun 49, couplées entre elles, sont représentées par un seul bloc, autrement dit par un seul composant électronique.

En outre, le module de désaccouplement électromagnétique 44 comprend des inductances de mode différentiel 50. Chacune des inductances de mode différentiel 50 est reliée électriquement à l'une des deuxièmes pistes électriques d'alimentation 60 de la plaque de circuit imprimé 46.

Ainsi, les inductances de mode différentiel 50 du module de désaccouplement électromagnétique 44 de l'unité électronique de contrôle 15 permettent de réduire un phénomène de couplage électromagnétique entre l'antenne radiofréquence filaire 58 et les fils d'alimentation électrique Bat+, Bat-, SP1, SP2 du câble d'alimentation électrique 18, en présentant une forte impédance aux courants circulant sur ces fils d'alimentation électrique Bat+, Bat-, SP1, SP2, ce phénomène de couplage électromagnétique étant induit par le rayonnement électromagnétique de l'antenne radiofréquence filaire 58.

Ceci permet de conserver les performances de rayonnement de l'antenne radiofréquence filaire 58 par une réduction du couplage électromagnétique entre celle-ci et les fils d'alimentation électrique Bat+, Bat-, SP1, SP2 du câble d'alimentation électrique 18.

De cette manière, les performances radiofréquences de l'antenne radiofréquence filaire 58 connectée électriquement au premier module de communication 27 de l'unité électronique de contrôle 15 ne sont pas dégradées par l'utilisation d'une antenne radiofréquence filaire non-blindée, par la présence des inductances de mode commun 49 au niveau de l'unité électronique de contrôle 15 et par la proximité des fils d'alimentation électrique Bat+, Bat-, SP1, SP2 du câble d'alimentation électrique 18 par rapport à l'antenne radiofréquence filaire 58.

En outre, le passage de l'antenne radiofréquence filaire 58 et des fils d'alimentation électrique Bat+, Bat-, SP1, SP2 du câble d'alimentation électrique 18 au travers du support de couple 21 et, éventuellement, de l'élément d'interface 39 de l'actionneur électromécanique 11 nécessite un volume de passage, autrement un encombrement, minimal dans le support de couple 21 et dans l'élément d'interface 39, puisque l'antenne radiofréquence filaire 58 est non-blindée et les fils d'alimentation électrique Bat+, Bat-, SP1, SP2 du câble d'alimentation électrique 18 peuvent être proches de l'antenne radiofréquence filaire 58, voire en contact avec celle-ci.

Ici, les inductances de mode commun 49, couplées entre elles, sont présentes pour s'affranchir d'un défaut de compatibilité électromagnétique de l'actionneur électromécanique 11, pouvant provenir du module d'alimentation électrique 51 du moteur électrique 16 et/ou du microcontrôleur 31 de l'unité électronique de contrôle 15.

Ainsi, les inductances de mode commun 49, couplées entre elles, permettent de limiter une perturbation électromagnétique dite de « mode commun ». Cette perturbation électromagnétique dite de « mode commun » est donc limitée dans les pistes électriques 59, 60 de la plaque de circuit imprimé 49 de l'unité électronique de contrôle 15 et dans les fils d'alimentation électrique Bat+, Bat-, SP1, SP2 du câble d'alimentation électrique 18, au moyen des inductances de mode commun 49.

Lorsqu'une perturbation électromagnétique dite de « mode commun » est présente, en l'occurrence en l'absence des inductances de mode commun 49, une onde électromagnétique est transmise dans les pistes électriques 59, 60 de la plaque de circuit imprimé 46 de l'unité électronique de contrôle 15 et dans les fils d'alimentation électrique Bat+, Bat-, SP1, SP2 du câble d'alimentation électrique 18 dans un même sens. Puis, ces ondes électromagnétiques se rebouclent dans un plan de référence, en l'occurrence un plan de masse, non représenté, de la carte électronique 55 ou une terre.

Toujours en l'absence des inductances de mode commun 49, dans le cas où l'actionneur électromécanique 11 est alimenté en énergie électrique par la batterie 24, le rebouclage des ondes électromagnétiques de la perturbation électromagnétique se produit dans le carter 17 de l'actionneur électromécanique 11, lorsque celui-ci est métallique.

La présence des inductances de mode commun 49 permet de s'affranchir des perturbations électromagnétiques dites de « mode commun », en bloquant celles-ci.

Par ailleurs, les inductances de mode différentiel 50 permettent d'augmenter localement une valeur d'impédance au niveau des deuxièmes pistes électriques d'alimentation 60 de la plaque de circuit imprimé 46, autrement dit augmentent localement une valeur d'impédance au niveau des deuxièmes pistes électriques d'alimentation 60 de la plaque de circuit imprimé 46, hormis la première piste électrique 59 reliant électriquement l'antenne radiofréquence filaire 58 au premier module de communication 27 de l'unité électronique de contrôle 15.

Ainsi, les inductances de mode différentiel 50 permettent de limiter la propagation d'une perturbation électromagnétique dite de « mode différentiel ». Cette perturbation électromagnétique dite de « mode différentiel » est donc limitée dans les deuxièmes pistes électriques d'alimentation 60 de la plaque de circuit imprimé 46 de l'unité électronique de contrôle 15 et dans les fils d'alimentation électrique Bat+, Bat-, SP1, SP2 du câble d'alimentation électrique 18, au moyen des inductances de mode différentiel 50.

Lorsqu'une perturbation électromagnétique dite de « mode différentiel » est présente, en l'occurrence en l'absence des inductances de mode différentiel 50, une onde électromagnétique est transmise dans les pistes électriques 59, 60 de la plaque de circuit imprimé 46 de l'unité électronique de contrôle 15 et dans les fils d'alimentation électrique Bat+, Bat-, SP1, SP2 du câble d'alimentation électrique 18 dans des sens opposés. Puis, ces ondes électromagnétiques se rebouclent par l'intermédiaire des pistes électriques 59, 60 de la plaque de circuit imprimé 46 de l'unité électronique de contrôle 15 et des fils d'alimentation électrique Bat+, Bat-, SP1, SP2 du câble d'alimentation électrique 18.

La présence des inductances de mode différentiel 50 permet de s'affranchir de la perturbation électromagnétique dite de « mode différentiel », en bloquant celle-ci.

Ici et de manière nullement limitative, les inductances de mode commun 49 sont au nombre de deux. Une première inductance de mode commun 49 est reliée électriquement à l'une des deuxièmes pistes électriques d'alimentation 60 et au fil d'alimentation électrique Bat+. En outre, une deuxième inductance de mode commun 49 est reliée électriquement à une autre des deuxièmes pistes électriques d'alimentation 60 et au fil d'alimentation électrique Bat-.

Ici et de manière nullement limitative, les inductances de mode différentiel 50 sont au nombre de trois, dont seuls deux sont visibles à la figure 7. Une première inductance de mode différentiel 50 est reliée électriquement à l'une des deuxièmes pistes électriques d'alimentation 60 et au fil d'alimentation électrique Bat+. Une deuxième inductance de mode différentiel 50 est reliée électriquement à une autre des deuxièmes pistes électriques d'alimentation 60 et aux fils d'alimentation électrique Bat- et SP1. En outre, une troisième inductance de mode différentiel 50 est reliée électriquement à une autre des deuxièmes pistes électriques d'alimentation 60 et au fil d'alimentation électrique SP2.

Avantageusement, chacune des inductances de mode différentiel 50 est déterminée avec une valeur d'impédance élevée à une valeur de la fréquence de communication du premier module de communication 27.

A titre d'exemple nullement limitatif, la valeur d'impédance peut être supérieure ou égale à 150Ω, dans le cas où la fréquence de communication est de l'ordre de 868MHz.

Par exemple, lorsque la valeur de chaque inductance de mode différentiel 50 est égale à 43nH et que la fréquence de communication est de l'ordre de 868MHz, la valeur de l'impédance est de l'ordre de 234Ω en théorie, mais celle-ci peut-être plus élevée, notamment quatre fois supérieure, comme relevé au cours d'une expérimentation mise en oeuvre par la Demanderesse.

Cette valeur d'impédance est obtenue par la formule suivante :

$$ Z = L\omega = L x 2\pi f $$

où L est la valeur de chaque inductance de mode différentiel 50, exprimée en nanoHenry, et
f est la fréquence de communication du premier module de communication 27, en Hertz.

En outre, chacune des inductances de mode différentiel 50 est déterminée de sorte à éviter une chute de tension trop importante due à son impédance à courant continu pour le fonctionnement de l'unité électronique de contrôle 15.

A titre d'exemple nullement limitatif, la valeur de la chute de tension de chacune des inductances de mode différentiel 50 peut être inférieure à 100mV.

Par exemple, lorsque la valeur de chaque inductance de mode différentiel 50 est égale à 43nH, la valeur de la chute de tension est de l'ordre de 80mV.

La fréquence de communication du premier module de communication 27 peut également être appelée la fréquence de réception et/ou d'émission de signaux radioélectriques du premier module de communication 27.

A titre d'exemples nullement limitatifs, la fréquence de communication du premier module de communication 27 peut être de l'ordre de 868MHz ou de l'ordre de 2,4GHz.

La fréquence de réception et/ou d'émission de signaux radioélectriques peut être différente et comprise dans une plage s'étendant entre 400MHz et 6GHz, et pouvant prendre, notamment, une valeur de l'ordre de 433MHz.

Avantageusement, chacune des inductances de mode commun 49 est reliée électriquement en série avec l'une des inductances de mode différentiel 50.

Avantageusement, l'antenne radiofréquence filaire 58 s'étend au moins en partie le long des fils d'alimentation électrique Bat+, Bat-, SP1, SP2 du câble d'alimentation électrique 18.

Avantageusement, le premier module de communication 27, les inductances de mode commun 49 et les inductances de mode différentiel 50 sont montées sur la plaque de circuit imprimé 46.

Avantageusement, l'une des inductances de mode différentiel 50 est reliée électriquement à la masse de la plaque de circuit imprimé 46 de l'unité électronique de contrôle 15.

Ici, l'inductance de mode différentiel 50, qui est reliée électriquement à la masse, est l'inductance de mode différentiel 50 reliée au premier fil d'alimentation électrique référencé Bat-, ainsi qu'au deuxième fil d'alimentation électrique SP1.

Grâce à la présente invention, les inductances de mode différentiel du module de désaccouplement électromagnétique de l'unité électronique de contrôle permettent de réduire un phénomène de couplage électromagnétique entre l'antenne radiofréquence filaire et les fils d'alimentation électrique du câble d'alimentation électrique, en présentant une forte impédance aux courants circulant sur ces fils d'alimentation électrique, ce phénomène de couplage électromagnétique étant induit par le rayonnement électromagnétique de l'antenne radiofréquence filaire.

Ceci permet de conserver les performances de rayonnement de l'antenne radiofréquence filaire par une réduction du couplage électromagnétique entre celle-ci et les fils d'alimentation électrique du câble d'alimentation électrique.

De cette manière, les performances radiofréquences de l'antenne radiofréquence filaire connectée électriquement au module de communication de l'unité électronique de contrôle ne sont pas dégradées par l'utilisation d'une antenne radiofréquence filaire non-blindée, par la présence des inductances de mode commun au niveau de l'unité électronique de contrôle et par la proximité des fils d'alimentation électrique du câble d'alimentation électrique par rapport à l'antenne radiofréquence filaire.

En outre, le passage de l'antenne radiofréquence filaire et des fils d'alimentation électrique du câble d'alimentation électrique au travers du support de couple de l'actionneur électromécanique ne nécessite qu'un volume de passage minimal dans le support de couple, puisque l'antenne radiofréquence filaire est non-blindée et les fils d'alimentation électrique du câble d'alimentation électrique peuvent être proches de l'antenne radiofréquence filaire, voire en contact avec celle-ci.

De nombreuses modifications peuvent être apportées aux exemples de réalisation décrits précédemment, sans sortir du cadre de l'invention défini par les revendications.

En variante, non représentée, le dispositif d'alimentation en énergie électrique 26 comprend uniquement la batterie 24, autrement dit est dépourvu du panneau photovoltaïque 25.

En variante, non représentée, le dispositif d'alimentation en énergie électrique 26 comprend, en outre, un chargeur. Ce chargeur est configuré pour être branché, autrement dit est branché, sur une prise électrique murale, de sorte à recharger la batterie 24 à partir d'un réseau d'alimentation électrique du secteur. Ce chargeur forme une source d'alimentation en énergie électrique externe.

En variante et en complément, le dispositif d'entraînement motorisé 5, en particulier l'actionneur électromécanique 11, est alimenté en énergie électrique par la batterie 24, à partir d'une batterie auxiliaire, non représentée, ou à partir d'un réseau d'alimentation électrique du secteur, en particulier par le réseau alternatif commercial, notamment en fonction d'un état de charge de la batterie 24.

En variante, non représentée, le dispositif d'alimentation en énergie électrique 26 comprend, en outre, une batterie auxiliaire, la batterie auxiliaire étant configurée pour recharger la batterie 24. Ainsi, la batterie 24 peut être rechargée au moyen de la batterie auxiliaire formant une source d'alimentation en énergie électrique externe, en particulier dans le cas où le dispositif d'occultation 3 est éloigné d'une prise électrique murale. En outre, la batterie auxiliaire peut permettre de recharger une batterie d'autres équipements électriques, notamment nomades, tels que, par exemple, un téléphone portable ou un ordinateur portable. Par ailleurs, une telle batterie auxiliaire, peut présenter au moins deux sorties électriques, en particulier une première sortie délivrant une tension de 12 volts pour alimenter en énergie électrique la batterie 24 et une deuxième sortie délivrant une tension de 5 volts pour alimenter en énergie électrique d'autres équipements électriques, dits nomades.

En variante, non représentée, le dispositif d'alimentation en énergie électrique 26 est formé par un réseau d'alimentation en énergie électrique, notamment du secteur.

En variante et, plus particulièrement, dans le cas où le dispositif d'alimentation en énergie électrique 26 est formé par un réseau d'alimentation en énergie électrique, notamment du secteur, le moteur électrique 16 peut être de type asynchrone.

En variante, non représentée, le boîtier 33 de l'unité électronique de contrôle 15 comprend deux demi-coques configurées pour coopérer ensemble, en particulier dans la configuration assemblée de l'unité électronique de contrôle 15. Dans la configuration assemblée de l'actionneur électromécanique 11, les deux demi-coques sont assemblées entre elles, de sorte à définir un plan de jonction s'étendant suivant une direction parallèle à l'axe de rotation X. Avantageusement, au moins l'une des deux demi-coques formant le boîtier 33 comprend des éléments de positionnement et de fixation de la carte électronique 55, notamment de la plaque de circuit imprimé 46, en particulier dans la configuration assemblée de l'unité électronique de contrôle 15.

En variante, non représentée, le boîtier 33 est fixé directement, autrement dit est configuré pour être fixé directement, au support de couple 21, autrement dit sans l'élément d'interface 39, au moyen d'au moins un élément de fixation, non représenté, en particulier dans la configuration assemblée de l'actionneur électromécanique 11. Le ou les éléments de fixation du boîtier 33 avec le support de couple 21 peuvent être, par exemple, une ou plusieurs vis de fixation et/ou un ou plusieurs éléments de fixation par encliquetage élastique.

En variante, non représentée, l'unité électronique de contrôle 15 est dépourvue du boîtier 33. Dans ce cas, la carte électronique 55, en particulier la plaque de circuit imprimé 46, est, d'une part, maintenue, notamment enfichée, dans le support de couple 21 ou dans l'élément d'interface 39 et, d'autre part, maintenue, notamment enfichée, dans un support, non représenté, monté en extrémité d'un autre organe de l'actionneur électromécanique 11, notamment le moteur électrique 16 ou le frein 29, en particulier dans la configuration assemblée de l'actionneur électromécanique 11.

En variante, non représentée, l'actionneur électromécanique 11 est inséré dans un rail, en particulier de section carrée ou rectangulaire, pouvant être ouvert à l'une ou à ses deux extrémités, en particulier dans la configuration assemblée du dispositif d'occultation 3. Par ailleurs, l'actionneur électromécanique 11 peut être configuré pour entraîner un arbre d'entraînement sur lequel s'enroule des cordons de déplacement et/ou d'orientation de l'écran 2, qui peut, avantageusement, être un store à lames dans ce cas.

En outre, les modes de réalisation et variantes envisagés peuvent être combinés pour générer de nouveaux modes de réalisation de l'invention, sans sortir du cadre de l'invention défini par les revendications.

**Revendications**

1. Dispositif d'entraînement motorisé (5) d'un dispositif d'occultation (3),

   le dispositif d'entraînement motorisé (5) comprenant au moins :

      - un actionneur électromécanique (11),
      - un dispositif d'alimentation en énergie électrique (26),
      - un câble d'alimentation électrique (18), le câble d'alimentation électrique (18) comprenant des fils d'alimentation électrique (Bat+, Bat-, SP1, SP2), et
      - une antenne radiofréquence filaire (58),

   l'actionneur électromécanique (11) comprenant au moins :

      - un moteur électrique (16),

- une unité électronique de contrôle (15),
- un carter (17), le moteur électrique (16) étant monté à l'intérieur du carter (17), et
- un support de couple (21), le support de couple (21) et l'unité électronique de contrôle (15) étant montés au moins en partie à l'intérieur du carter (17),

l'unité électronique de contrôle (15) comprenant au moins :

- une plaque de circuit imprimé (46), et
- un module de communication (27), l'antenne radiofréquence filaire (58) étant reliée électriquement au module de communication (27) de l'unité électronique de contrôle (15),

l'unité électronique de contrôle (15) et le moteur électrique (16) étant alimentés en énergie électrique à partir du dispositif d'alimentation en énergie électrique (26), au moyen du câble d'alimentation électrique (18),
l'antenne radiofréquence filaire (58) s'étendant au travers du support de couple (21) et étant reliée électriquement à une première piste électrique (59) de la plaque de circuit imprimé (46), chacun des fils d'alimentation électrique (Bat+, Bat-, SP1, SP2) du câble d'alimentation électrique (18) s'étendant au travers du support de couple (21) et étant relié électriquement à une deuxième piste électrique d'alimentation (60) de la plaque de circuit imprimé (46),
**caractérisé**
**en ce que** l'antenne radiofréquence filaire (58) est non-blindée,
**en ce que** l'unité électronique de contrôle (15) comprend, en outre :

- un module de filtrage électromagnétique (38), et
- un module de désaccouplement électromagnétique (44),

**en ce que** le module de filtrage électromagnétique (38) comprend des inductances de mode commun (49), couplées entre elles, chacune des inductances de mode de commun (49) étant reliée électriquement à l'une des deuxièmes pistes électriques d'alimentation (60) de la plaque de circuit imprimé (46),
et **en ce que** le module de désaccouplement électromagnétique (44) comprend des inductances de mode différentiel (50), chacune des inductances de mode différentiel (50) étant reliée électriquement à l'une des deuxièmes pistes électriques d'alimentation (60) de la plaque de circuit imprimé (46).

2. Dispositif d'entraînement motorisé (5) d'un dispositif d'occultation (3) selon la revendication 1, **caractérisé en ce que** chacune des inductances de mode commun (49) est reliée électriquement en série avec l'une des inductances de mode différentiel (50).

3. Dispositif d'entraînement motorisé (5) d'un dispositif d'occultation (3) selon la revendication 1 ou selon la revendication 2, **caractérisé en ce que** l'antenne radiofréquence filaire (58) s'étend au moins en partie le long des fils d'alimentation électrique (Bat+, Bat-, SP1, SP2) du câble d'alimentation électrique (18).

4. Dispositif d'entraînement motorisé (5) d'un dispositif d'occultation (3) selon l'une quelconque des revendications 1 à 3, **caractérisé**

**en ce que** le dispositif d'alimentation en énergie électrique (26) comprend au moins :

- une batterie (24), et
- un panneau photovoltaïque (25),

**en ce que** le câble d'alimentation électrique (18) comprend des premiers fils d'alimentation électrique (Bat+, Bat-) et des deuxièmes fils d'alimentation électrique (SP1, SP2),
**en ce que** les premiers fils d'alimentation électrique (Bat+, Bat-) relient électriquement la batterie (24) à l'unité électronique de contrôle (15), et **en ce que** les deuxièmes fils d'alimentation électrique (SP1, SP2) relient électriquement le panneau photovoltaïque (25) à l'unité électronique de contrôle (15).

5. Dispositif d'entraînement motorisé (5) d'un dispositif d'occultation (3) selon l'une quelconque des revendications 1 à 4, **caractérisé**

**en ce que** le câble d'alimentation électrique (18) comprend une fiche électrique (54),
**en ce que** l'actionneur électromécanique (11) comprend, en outre, un dispositif de connexion électrique (56), le dispositif de connexion électrique (56) étant monté à l'intérieur du carter (17),
et **en ce que** la fiche électrique (54) est connectée électriquement au dispositif de connexion électrique (56).

6. Dispositif d'entraînement motorisé (5) d'un dispositif d'occultation (3) selon la revendication 5, **caractérisé**

**en ce que** le support de couple (21) comprend, en outre, un logement (37),
et **en ce que** la fiche électrique (54) du câble d'alimentation électrique (18) est insérée à l'intérieur du logement (37) du support de couple (21).

7.  Dispositif d'entraînement motorisé (5) d'un dispositif d'occultation (3) selon la revendication 5 ou selon la revendication 6, **caractérisé en ce que** le dispositif de connexion électrique (56) est enfiché sur un bord (46a) de la plaque de circuit imprimé (46).

8.  Dispositif d'entraînement motorisé (5) d'un dispositif d'occultation (3) selon l'une quelconque des revendications 1 à 7, **caractérisé en ce que** le module de communication (27), les inductances de mode commun (49) et les inductances de mode différentiel (50) sont montées sur la plaque de circuit imprimé (46).

9.  Dispositif d'occultation (3) comprenant au moins :

    - un écran (2), et
    - un dispositif d'entraînement motorisé (5),

    **caractérisé en ce que** le dispositif d'entraînement motorisé (5) est conforme à l'une quelconque des revendications 1 à 8, l'écran (2) étant configuré pour être entraîné en déplacement par l'actionneur électromécanique (11) du dispositif d'entraînement motorisé (5).

10. Dispositif d'occultation (3) selon la revendication 9, **caractérisé**

    **en ce que** le dispositif d'occultation (3) comprend, en outre, un tube d'enroulement (4),
    **en ce que** l'écran (2) est enroulable sur le tube d'enroulement (4),
    et **en ce que** le tube d'enroulement (4) est agencé de sorte à être entraîné en rotation par l'actionneur électromécanique (11).

9

4

100

40

2

-1-

3

8

7

**Fig.1**

**Fig.2**

Fig.3

EP 4 195 469 A1

**Fig.4**

EP 4 195 469 A1

Fig.5

**Fig.6**

**Fig.7**

Europäisches
Patentamt

European
Patent Office

Office européen
des brevets

**RAPPORT DE RECHERCHE EUROPEENNE**

Numéro de la demande

**EP 22 21 2732**

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (IPC) |
| Y | WO 2020/064882 A1 (SOMFY ACTIVITES SA [FR]) 2 avril 2020 (2020-04-02) * page 11, lignes 26-27; figures 1-12 * * page 24, lignes 24-35 * ----- | 1-10 | INV. H02K11/02 E06B9/72 H02K11/35 |
| Y | CN 210 428 126 U (BEIFANG LIANCHUANG COMMUNICATION CO LTD) 28 avril 2020 (2020-04-28) * alinéas [0004], [0016]; figure 5 * ----- | 1-4,8-10 | ADD. E06B9/40 E06B9/68 |
| Y | EP 3 695 088 B1 (SOMFY ACTIVITES SA [FR]) 17 novembre 2021 (2021-11-17) * figures 1-16 * ----- | 5-7 | |

DOMAINES TECHNIQUES RECHERCHES (IPC)

H02K
E06B

Le présent rapport a été établi pour toutes les revendications

| Lieu de la recherche | Date d'achèvement de la recherche | Examinateur |
|---|---|---|
| La Haye | 4 avril 2023 | Maître, Jérôme |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................................
& : membre de la même famille, document correspondant

EPO FORM 1503 03.82 (P04C02)

**EP 4 195 469 A1**

## ANNEXE AU RAPPORT DE RECHERCHE EUROPEENNE
## RELATIF A LA DEMANDE DE BREVET EUROPEEN NO.

EP 22 21 2732

04-04-2023

| Document brevet cité au rapport de recherche | Date de publication | Membre(s) de la famille de brevet(s) | | Date de publication |
|---|---|---|---|---|
| WO 2020064882 A1 | 02-04-2020 | CN | 113015840 A | 22-06-2021 |
| | | EP | 3857014 A1 | 04-08-2021 |
| | | FR | 3086688 A1 | 03-04-2020 |
| | | US | 2022034161 A1 | 03-02-2022 |
| | | WO | 2020064882 A1 | 02-04-2020 |
| CN 210428126 U | 28-04-2020 | AUCUN | | |
| EP 3695088 B1 | 17-11-2021 | CN | 111201363 A | 26-05-2020 |
| | | EP | 3695088 A1 | 19-08-2020 |
| | | FR | 3072116 A1 | 12-04-2019 |
| | | PL | 3695088 T3 | 23-05-2022 |
| | | US | 2020303988 A1 | 24-09-2020 |
| | | WO | 2019072837 A1 | 18-04-2019 |

EPO FORM P0460

**RÉFÉRENCES CITÉES DANS LA DESCRIPTION**

**Documents brevets cités dans la description**

- WO 2020064882 A1
- CN 210428126 U